# DEMANDE DE BREVET EUROPEEN

(11) **EP 4 318 563 A1**
(43) Date de publication de la demande: **07.02.2024**
(21) Numéro de dépôt: 23184828.4
(22) Date de dépôt: 11.07.2023
(51) Int. Cl.: H01L 23/00, H01L 21/768, H01L 21/311, H01L 21/321, H01L 23/485, H01L 23/544, H04L 9/32, G06F 21/73

(54) **PROCÉDÉ DE RÉALISATION D'UNE ZONE D'INDIVIDUALISATION D'UN CIRCUIT INTÉGRÉ**

(30) Priorité: 19.07.2022 FR 2207403
(71) Demandeur: Commissariat à l'énergie atomique et aux énergies alternatives, 75015 Paris (FR)
(72) Inventeur: POSSEME, Nicolas, 38054 GRENOBLE Cedex 09 (FR); LANDIS, Stefan, 38054 GRENOBLE Cedex 09 (FR)
(74) Mandataire: Hautier IP

(57) **Abrégé**

L'invention porte sur un procédé de réalisation d'une zone d'individualisation d'une puce comprenant un niveau de composants et un niveau (30A) de contacts comportant des vias (30), le procédé comprenant les étapes suivantes :
- fournir le niveau de composants et une couche diélectrique (200),
- former sur la couche diélectrique (200) un masque (300),
- graver la couche diélectrique (200) au travers des ouvertures de masque (301) de façon à former des ouvertures (320, 320R) débouchant sur les zones de contact (20) du niveau de composants,
- former des résidus (R) fluorés en apportant des espèces fluorées sur au moins certaines zones de contact (20), les ouvertures (320, 320R) comprenant alors des ouvertures (320R) avec résidus fluorés et des ouvertures (320) sans résidus
- remplir les ouvertures (320, 320R) de sorte à former les vias (30) du niveau (30A) de contacts, lesdits vias (30) comprenant des vias fonctionnels (30OK) au niveau des ouvertures sans résidus (320) et des vias altérés (30KO) au niveau des ouvertures avec résidus (320R).

## Description

### DOMAINE TECHNIQUE

La présente invention concerne l'individualisation des circuits intégrés. Elle trouve pour application particulièrement avantageuse la protection de circuits intégrés, ou de dispositifs intégrant de tels circuits.

### ETAT DE LA TECHNIQUE

L'individualisation d'un circuit intégré permet l'identification unique de ce circuit intégré. Cela permet par exemple de protéger le circuit intégré contres des attaques par émulation des fonctions que le circuit intégré est sensé faire.

Afin d'identifier de manière unique un circuit intégré, il existe des solutions visant à utiliser les dispersions fonctionnelles inhérentes aux circuits intégrés. Au niveau d'un transistor par exemple, fabriqué selon des étapes technologiques dites de début de ligne FEOL (acronyme de « Front End Of Line »), les résistances des contacts métalliques ou des vias différent d'un circuit à l'autre. Cela induit des chutes de tension et/ou des vitesses de propagation variables pour les signaux électriques reçus ou émis par ces transistors. Par conséquent toute modification de la résistance de contact au niveau du via peut être exploitée pour discriminer des temps de réponses ou chute de tension dans le circuit ainsi réalisé.

D'autres types de dispersions fonctionnelles sont également exploitables, comme l'instabilité au démarrage des composants, par exemple pour les mémoires SRAMS (acronyme de « Static Random Access Memory » signifiant mémoire vive statique) qui présentent un état unique à chaque démarrage.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

Il existe donc un besoin consistant à limiter, voire à résoudre, les problématiques des solutions connues.

### RESUME

Pour atteindre cet objectif, selon un mode de réalisation on prévoit un procédé de réalisation d'une zone d'individualisation d'une puce microélectronique, ladite puce comprenant au moins :
- un niveau de composants, lesdits composants comprenant chacun au moins une zone de contact métallique,
- un niveau de contact comportant des vias destinés à connecter électriquement les zones de contact métalliques du niveau de composants,
- la puce présentant au moins une autre zone, distincte de la zone d'individualisation, destinée à former une zone fonctionnelle de la puce.

Le procédé comprend au moins les étapes suivantes effectuées au niveau de la zone d'individualisation de la puce :
- fournir au moins le niveau de composants,
- former au moins une couche diélectrique sur le niveau de composants, ladite couche diélectrique étant à base d'un matériau diélectrique,
- former sur l'au moins une couche diélectrique un masque de gravure présentant des ouvertures de masque situées au moins en partie au droit des zones de contact et rendant accessible l'au moins une couche diélectrique,
- graver l'au moins une couche diélectrique au travers des ouvertures de masque par au moins une gravure de façon à former des ouvertures de vias débouchant sur les zones de contact métalliques du niveau de composants,
- former des résidus fluorés aléatoirement répartis au niveau de certaines ouvertures de vias, en apportant des espèces fluorées sur au moins certaines zones de contact métalliques, les ouvertures de vias comprenant alors des ouvertures avec résidus fluorés et des ouvertures sans résidus,
- remplir les ouvertures avec un matériau électriquement conducteur de sorte à former au moins les vias du niveau d'interconnexions, lesdits vias comprenant des vias fonctionnels au niveau des ouvertures sans résidus et des vias altérés au niveau des ouvertures avec résidus fluorés.

Le procédé comprend en outre, préalablement à la formation des résidus fluorés dans la zone d'individualisation, une formation d'un masque de protection sur la zone destinée à former la zone fonctionnelle de la puce.

Ainsi, les résidus fluorés empêchent que le matériau électriquement conducteur soit correctement déposé dans certaines ouvertures, notamment en affectant la conformité du dépôt. Ces résidus fluorés conduisent alors à la formation de défauts dans certains vias, au niveau des zones de contact. Ces vias sont altérés. Ces vias altérés présentent typiquement une résistance électrique supérieure à celle des vias fonctionnels. L'augmentation de résistance électrique est typiquement localisée au niveau des zones de contact, là où se forment les résidus fluorés.

Le procédé proposé permet donc de dégrader volontairement mais aléatoirement le niveau de contacts. Cette dégradation volontaire permet de créer des vias altérés ou inactifs répartis de façon aléatoire au sein de la zone d'individualisation de la puce. Le diagramme de réponse de la puce ou du circuit intégré sera donc intimement lié à ce caractère aléatoire. Cette réponse sera par conséquent unique. Chaque circuit intégré réalisé par ce procédé génère ainsi une réponse différente. Par ailleurs, le diagramme de réponse du circuit intégré sera stable dans le temps contrairement aux solutions décrites ci-dessus dans la section relative à l'état de la technique.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en oeuvre et à un cout réduit, afin de réaliser une zone d'individualisation d'un circuit intégré. Cela permet ainsi d'individualiser des circuits sans avoir recours à des technologies de lithographie spécifiques pour modifier d'une puce à une autre les motifs de la zone d'individualisation.

Les résidus fluorés sont formés lors de l'apport d'espèces fluorées au niveau de certaines zones de contact. Le fluor va typiquement réagir avec le métal des zones de contact et l'humidité ambiante pour former des résidus en surface des zones de contact. Les résidus fluorés peuvent être des résidus fluoro-métalliques.

Un autre aspect concerne un procédé de réalisation d'un dispositif microélectronique comportant au moins un circuit intégré, le circuit intégré comportant au moins :
- un niveau de composants, comprenant chacun au moins une zone de contact,
- un niveau de contact comportant des vias destinés à connecter électriquement les zones de contact du niveau de composants,
- une zone d'individualisation du circuit intégré.

La zone d'individualisation est réalisée en mettant en oeuvre le procédé décrit précédemment, de préférence sur une partie seulement du circuit intégré.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut ainsi s'agir d'un dispositif destiné à assurer une fonction électronique, optique, mécanique etc. Il peut aussi s'agir d'un produit intermédiaire uniquement destiné à la réalisation d'un autre dispositif microélectronique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures 1 à 3 illustrent schématiquement en coupe transverse des étapes de réalisation d'un niveau de contact pour des composants de type transistors, selon un mode de réalisation de la présente invention.
Les figures 4A à 4C illustrent schématiquement respectivement en coupe transverse et en vue de dessus des étapes de réalisation d'une zone d'individualisation réalisée dans le niveau de contact illustré aux figures 1 à 3, selon un mode de réalisation de la présente invention.
Les figures 5A et 5B illustrent schématiquement respectivement en coupe transverse et en vue de dessus des étapes de réalisation d'une zone fonctionnelle réalisée dans le niveau de contact illustré aux figures 1 à 3, selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs des différentes couches, vias, motifs et reliefs ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :

Selon un exemple, la formation des résidus fluorés est effectuée par plasma à base d'espèces fluorées, avec une tension de polarisation nulle.

Selon un exemple, les espèces fluorées sont prises parmi CF4, NF3 ou SF6.

Selon un exemple, le procédé comprend en outre une étape de retrait du masque de gravure avant formation des résidus.

Selon un exemple, le masque de gravure est à base de carbone.

Selon un exemple, le retrait du masque de gravure est effectué par plasma à base d'oxygène.

Selon un exemple, les zones de contact métalliques sont à base de siliciure métallique.

Selon un exemple, les résidus fluorés présentent une résistivité électrique supérieure à celle des zones de contact.

Selon un exemple, les zones de contact métalliques sont à base de Ni, par exemple de NiPtSi.

Selon un exemple, l'au moins une couche diélectrique comprend une première couche à base de SiN formée directement sur les zones de contact et une deuxième couche à base de SiO2 formée sur ladite première couche

Selon un exemple, l'au moins une gravure comprend une gravure de la deuxième couche par plasma à base d'une chimie CF4/C4F8, suivie d'une gravure de la première couche par plasma à base d'une chimie CH3F/Ar/O2.

Selon un exemple, les composants sont des transistors et les zones de contact sont prises parmi des sources, des drains, des grilles desdits transistors.

La réalisation des vias altérés ou inactifs aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente typiquement une surface plus grande que la surface de la zone d'individualisation. En particulier, la zone fonctionnelle peut présenter une surface au moins deux fois supérieure à celle de la zone d'individualisation. Le niveau de composants ainsi que le niveau de contact s'étendent dans ladite au moins une autre zone. La zone fonctionnelle est destinée à assurer des fonctions logiques pour le fonctionnement attendu du circuit intégré. Les contacts et les vias de cette zone fonctionnelle sont typiquement sans défaut. Cette zone fonctionnelle peut également comprendre des composants, tel que par exemple des transistors, des diodes, des MEMS etc. La zone fonctionnelle est réalisée de façon standard, avec les procédés bien connus de l'homme du métier. Dans la suite, seule la zone d'individualisation et son procédé de fabrication sont illustrés et détaillés.

Dans le cadre de la présente invention, une zone d'individualisation dite PUF est parfaitement différenciée d'une telle zone fonctionnelle, par exemple destinée à effectuer des opérations logiques. La zone d'individualisation a quant à elle principalement et de préférence uniquement comme fonction de permettre l'identification unique de la puce et donc l'authentification de la puce. À cet effet, et comme cela sera détaillé par la suite, lors du procédé de fabrication, on prévoit de dégrader aléatoirement le niveau de contact de façon à obtenir des vias inactifs. Plus précisément, on prévoit de créer de manière aléatoire des défauts au niveau de certains vias et/ou de certaines zones de contact, de façon à rendre inactifs ces vias du niveau de contact.

Un diagramme de réponse du circuit intégré est obtenu en appliquant une routine de test électrique ou logique aux entrées des composants de la zone d'individualisation, puis en mesurant l'état électrique ou logique en sortie des composants de la zone d'individualisation. Le principe est que l'on dispose pour chaque circuit intégré d'une zone d'individualisation comprenant un réseau unique de vias fonctionnels et de vias inactifs. La réponse de chaque circuit intégré sera donc différente. Chaque circuit intégré pourra donc être identifié de manière unique. La zone d'individualisation peut être qualifiée de zone PUF et la zone fonctionnelle peut être qualifiée de zone non-PUF.

Selon l'invention, le diagramme de réponse du circuit intégré dépend du nombre et de la position des vias inactifs dans la zone d'individualisation.

La zone d'individualisation est accessible distinctement de la zone fonctionnelle. La zone d'individualisation est localisée sur une zone bien délimitée de la puce. La zone d'individualisation est par exemple de forme polygonale, par exemple rectangulaire. Ainsi, n'importe quelle zone défectueuse ne peut pas être assimilable à une zone d'individualisation PUF. De même, n'importe quelle zone non défectueuse ne peut pas être assimilable à une zone fonctionnelle.

Un niveau de contact comprend des portions conductrices généralement qualifiées de vias, qui sont destinées à connecter des zones de contact d'un composant. Les différents vias sont en outre généralement isolés des autres éléments du circuit intégré par au moins une couche diélectrique.

Le procédé est typiquement mis en oeuvre dans les étapes de fabrication de « début de ligne », dites FEOL (acronyme de Front End Of Line), correspondant à la réalisation des niveaux de contact sur les composants unitaires.

Dans la présente demande, les termes « puce » et « circuit intégré » sont employés en synonymes.

Il est précisé que, dans le cadre de la présente invention, le terme via regroupe toutes les connexions électriques tels que les plots, lignes et structures conductrices qui s'étendent, de préférence perpendiculairement, depuis des zones de contact d'un composant du circuit intégréDe préférence les vias forment chacun un cylindre, de section sensiblement circulaire.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, « à base » d'un matériau A, un substrat, un film, une couche comprenant ce matériau A uniquement ou ce matériau A et éventuellement d'autres matériaux, par exemple des éléments dopants.

Plusieurs modes de réalisation de l'invention mettant en oeuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B.

Dans le cadre de la présente invention, on qualifie de résine un matériau organique ou organo-minéral pouvant être mis en forme par une exposition à un faisceau d'électrons, de photons ou de rayons X ou mécaniquement. Ces résines sont typiquement employées pour des étapes de lithographie.

On peut citer à titre d'exemple des résines classiquement employées en microélectronique, des résines à base de polystyrène (PS), de méthacrylate (par exemple le Polymethyl méthacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, on parlera préférentiellement d'épaisseur pour une couche et de profondeur pour une gravure. L'épaisseur est prise selon une direction normale au plan d'extension principal de la couche, et la profondeur est prise perpendiculairement au plan basal xy du substrat. Ainsi, une couche présente typiquement une épaisseur selon z, et une gravure présente une profondeur selon z également. Les termes relatifs « sur », « surmonte », « sous », « sous-jacent » se réfèrent à des positions prises selon la direction z.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures en coupe transverse.

Le procédé d'individualisation est typiquement mis en oeuvre lors de la formation d'un niveau de contact sur un niveau de composants FEOL. Ce niveau de composants peut par exemple comprendre différents types de transistors, des éléments mémoire ou d'autres dispositifs élémentaires microélectroniques.

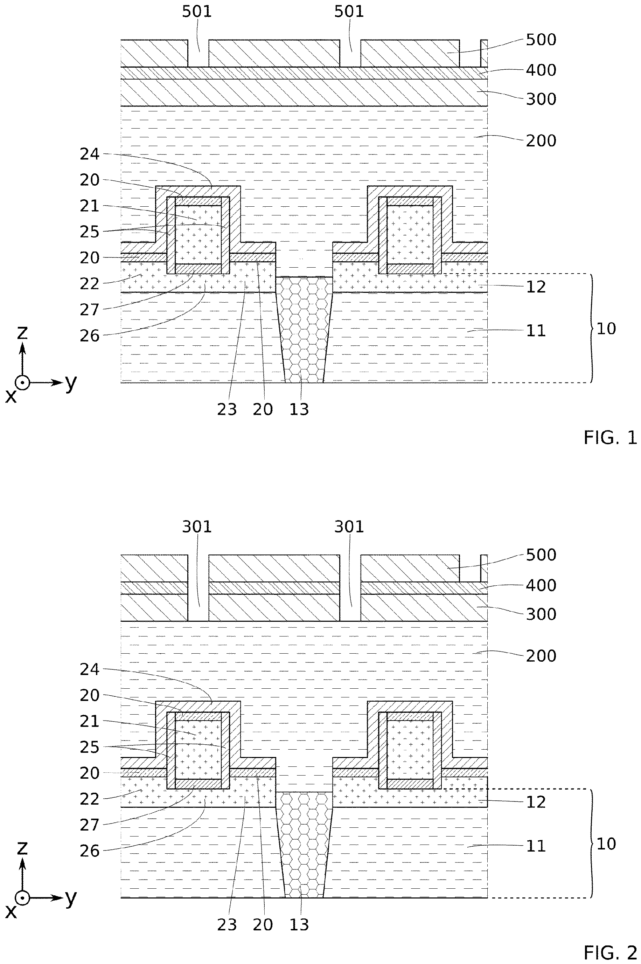

La figure 1 illustre de manière schématique des composants de type transistors MOSFET (transistors à effet de champ métal-oxyde-semiconducteur) à source et drain surélevés (RSD acronyme de Raised Source Drain). Ces transistors comprennent classiquement une grille 21 à base de silicium polycristallin et un diélectrique de grille 27 surmontant un canal 26 formé dans une couche active 12 d'un substrat 10, par exemple de type silicium sur isolant SOI (Silicon on Insulator). Un tel substrat SOI comprend de façon connue une couche d'oxyde enterrée 11 dite BOX (Burried Oxyde) intercalée entre un support massif en silicium (non visible) et une couche active 12 dite topSi. Les transistors sont typiquement isolés les uns des autres par des tranchées d'isolation 13.

Les transistors illustrés ici comprennent en outre des sources 22 et drains 23 surélevés à base de silicium, de part et d'autre de la grille 21 et séparés de la grille 21 par des espaceurs 25.

La grille 21 et les sources 22 et drains 23 comprennent des zones de contact 20, typiquement formées par siliciuration du silicium. Ces zones de contact 20 sont de préférence métalliques, de préférence à base de NiPtSi. Les zones de contact 20 sont destinées à être connectées à des pistes électriques par l'intermédiaire d'un niveau de contact formé sur les transistors, ce niveau de contact comprenant typiquement des contacts sous forme de vias.

Pour former le niveau de contact, au moins une couche diélectrique 200 est déposée sur les transistors, puis structurée de manière à former les contacts sous forme de vias comme décrit et illustré dans la suite. Cette couche diélectrique 200 a pour fonction d'isoler électriquement les vias entre eux. Cette couche diélectrique 200 a également pour fonction de former une barrière contre la diffusion du cuivre. Cette couche diélectrique 200 est par exemple à base de SiO₂. La couche diélectrique 200 peut présenter une épaisseur typiquement comprise entre quelques centaines de nanomètres et quelques microns, par exemple de l'ordre de 500 nm.

Préalablement au dépôt de la couche diélectrique 200, une couche 24 d'arrêt de gravure est de préférence déposée de façon conforme sur les transistors du niveau de composants. Cette couche 24 d'arrêt de gravure est ainsi intercalée entre les transistors et la couche diélectrique 200. Elle permet de contrôler l'arrêt de la gravure de la couche diélectrique 200 lors de la formation des ouvertures de vias. Cette couche 24 d'arrêt de gravure est de préférence à base de nitrure de silicium, par exemple SiN. La couche 24 d'arrêt de gravure peut présenter une épaisseur typiquement de l'ordre de quelques dizaines de nanomètres, par exemple de l'ordre de 20 nm.

La couche 24 d'arrêt de gravure et la couche diélectrique 200 peuvent être déposées par dépôt chimique en phase vapeur (CVD), par exemple par dépôt chimique en phase vapeur assisté par plasma (PECVD, acronyme de « Plasma Enhanced Chemical Vapor Déposition ») ou par dépôt chimique en phase à basse pression (LPCVD, acronyme de « Low Pressure Chemical Vapor Déposition »).

Afin de réaliser les contacts au travers de la couche diélectrique 200 et de la couche 24 d'arrêt de gravure, un masque de gravure 300 est formé sur la couche diélectrique 200. Il est choisi de préférence en un matériau A présentant une sélectivité de gravure importante vis-à-vis du matériau diélectrique. La sélectivité de gravure S_{diélec:A} entre le matériau diélectrique et le matériau A est de préférence supérieure ou égale à 10:1.Ce masque de gravure 300 est de préférence de type SOC (spin on carbon), à base de carbone. Le masque 300 de type SOC peut présenter une épaisseur de l'ordre de 150 nm.

Comme illustré aux figures 1 et 2, un masque 500 à base de résine comprenant des ouvertures 501 formant des motifs de vias est déposé sur le masque de gravure 300. Ces ouvertures 501 du masque 500 servent notamment à ouvrir le masque de gravure 300. Les ouvertures 501 sont situées au moins en partie au droit des zones de contact 20. Les ouvertures 501 présentent une dimension latérale, typiquement un diamètre, comprise entre quelques dizaines de nanomètres et quelques centaines de nanomètres. Le masque 500 en résine photosensible peut présenter une épaisseur comprise entre 50 nm et 300 nm.

Un revêtement antireflets 400 de type SiARC (silicon anti reflective coating signifiant revêtement anti réflexion à base de silicium) est de préférence intercalé entre le masque 300 et le masque 500. Le revêtement antireflets 400 peut présenter une épaisseur comprise entre 25 nm et 35 nm, par exemple de l'ordre de 30 nm.

Les épaisseurs des couches de masque 300, 400, 500 peuvent varier selon les dimensions des vias visées. Les différentes couches de masque 300, 400, 500 peuvent être déposées par une méthode classique de spin coating (à la tournette).

Les ouvertures 501 du masque 500 sont réalisées en mettant en oeuvre des techniques classiques de lithographie, telles que la lithographie optique, la lithographie électronique par faisceau d'électrons (ebeam), la lithographie par nanoimpression ou toute autre technique de lithographie connue de l'homme du métier.

Comme illustré à la figure 2, une gravure est effectuée dans le masque de gravure 300 pour y transférer les motifs 501 du masque 500. Cette gravure est configurée pour former les ouvertures de masque 301.

Le revêtement antireflets et le masque de gravure 300 peuvent être gravés par plasma, à l'aide d'une chimie de gravure à base de fluor par exemple CF4/N2 pour la couche antireflets, ou de préférence à base de N2/H2 pour la couche de masque 300. Ce type de plasma permet d'utiliser un masque 500 à base de résine présentant une fine épaisseur, par exemple inférieure à 200 nm.

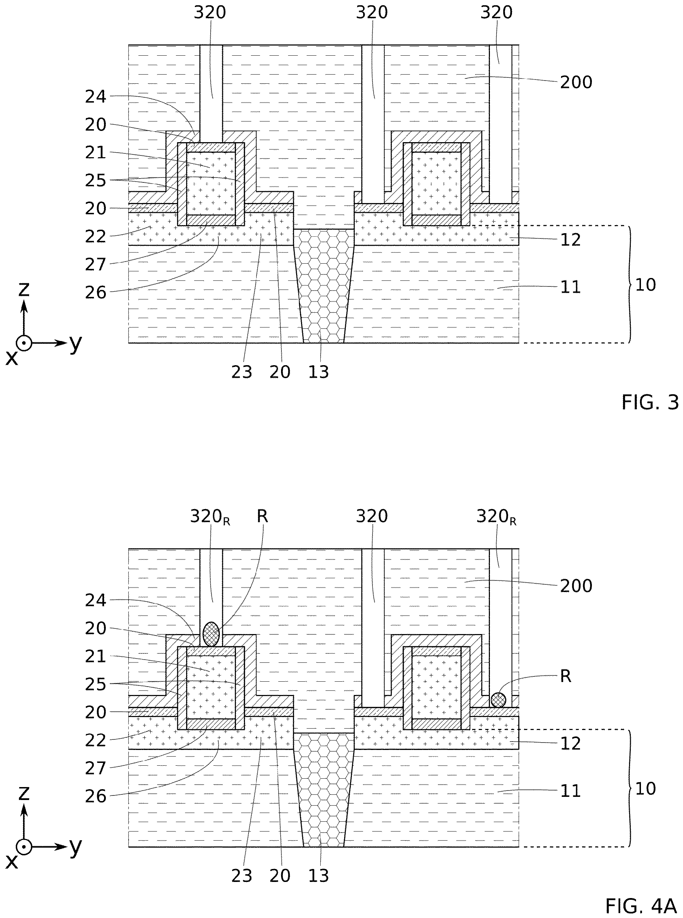

Comme illustré à la figure 3, la couche diélectrique 200 est ensuite gravée au travers des ouvertures 301 du masque de gravure 300. Cette gravure est typiquement effectuée par plasma à base d'une chimie fluorocarbonnée, par exemple une chimie CF4/C4F8/O2, avec arrêt sur la couche 24 d'arrêt de gravure à base de nitrure. La couche 24 d'arrêt de gravure à base de nitrure est ensuite gravée par plasma à base d'une chimie CH3F/Ar/O2 avec arrêt sur le siliciure des zones de contact 20. Cela permet de former les ouvertures de vias 320 du niveau de contact.

Comme illustré à la figure 3, les couches de masque 300, 400, 500 sont de préférence retirées après formation des ouvertures de vias 320. Ce retrait peut se faire classiquement par une étape dite de « stripping », par exemple par plasma à base d'oxygène. Le stripping O2 permet également de nettoyer les zones de contact 20.

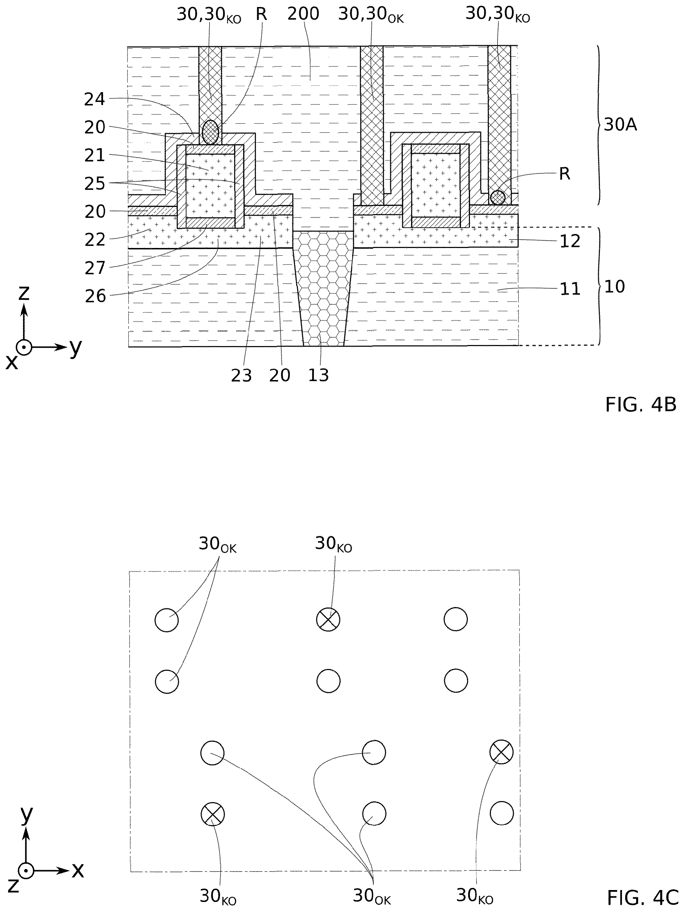

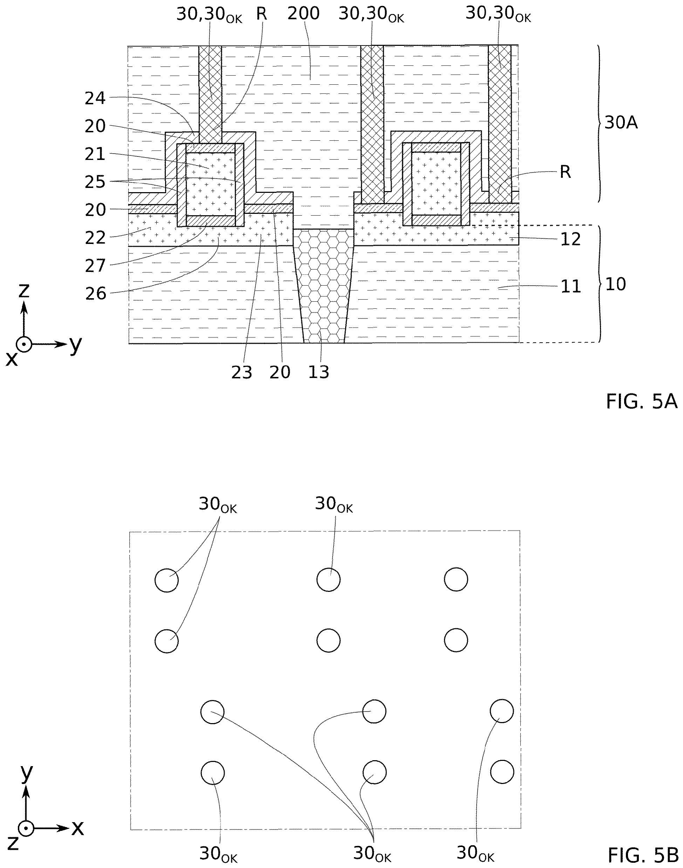

Dès lors, il est possible de procéder à la réalisation d'une zone d'individualisation dite PUF présentant une défectivité dans le niveau de contacts, et d'une zone fonctionnelle ou « non PUF », sans défectivité et destinée au fonctionnement normal de la puce. Ces deux zones peuvent être situées à des endroits différents de la puce et ne sont pas nécessairement à proximité l'une de l'autre. Les figures 4A, 4B, 4C illustrent la réalisation d'une zone PUF et les figures 5A, 5B illustrent la réalisation d'une zone non PUF.

Comme illustré à la figure 4A, pour réaliser la zone PUF, selon le principe de l'invention, un apport de fluor est effectué à la surface des zones de contact 20 à base de NiPtSi. Ainsi, de préférence après le stripping O2, les zones de contact 20 sont typiquement exposées à un plasma in situ à base de fluor, par exemple à base de CF4 ou plus préférentiellement à base de SF6 ou NF3, sans tension de polarisation. On utilisera de préférence SF6 ou NF3 en limitant le bombardement ionique de façon à limiter l'apport d'espèces fluorocarbonnées pouvant endommager le siliciure NiPtSi des zones de contact. Cet apport en fluor favorise la formation aléatoire de résidus R fluorés en surface des zones de contact 20. Le fluor apporté en surface des zones de contact 20 va réagir avec le métal des zones de contact 20, de préférence en NiPtSi, et avec l'humidité ambiante pour former les résidus R fluorés. Les résidus R fluorés ne sont pas tous de même taille, ni présents dans toutes les ouvertures de vias 320. Après formation des résidus R, on obtient ainsi des ouvertures de vias 320 sans résidus et des ouvertures de vias 320_{R} avec résidus R. Les ouvertures de vias 320_{R} avec résidus R peuvent être totalement ou partiellement bouchées par les résidus R. La distribution des résidus R est totalement aléatoire.

Comme illustré aux figures 4B, 4C, les ouvertures 320, 320_{R} sont ensuite remplies par un matériau conducteur, de façon à former respectivement des vias fonctionnels 30_{OK} et des vias altérés ou inactifs 30_{KO}. Les vias fonctionnels 30_{OK} et les vias inactifs 30_{KO} forment le niveau de contacts 30A. Le matériau conducteur est de préférence du cuivre. Les procédés de dépôt de cuivre, par exemple un remplissage électrolytique ECD (acronyme de « Electro Chemical Déposition »), sont bien connus de l'homme du métier.

Les vias fonctionnels 30_{OK} présentent typiquement une conductivité nominale lors d'un test électrique dédié. Les vias inactifs 30_{KO} présentent typiquement une conductivité inférieure à la conductivité nominale, voire une conductivité nulle, lors de ce test électrique. Un certain nombre de vias 30_{KO}, aléatoirement répartis, ne seront donc pas connectés ou seront mal connectés aux zones de contact 20.

Selon une possibilité, les vias 30_{KO} mal connectés peuvent être ultérieurement désactivés, par exemple si la stabilité de leur connexion électrique n'est pas assez performante. Ils peuvent être utilisés en l'état, en tirant parti de leur résistance de connexion plus élevée (la surface de contact métallique étant plus faible que pour un via fonctionnel 30_{OK}). Cette résistance de connexion plus élevée induit notamment un temps de réponse différent de la circuiterie, par exemple lors du test électrique de la zone d'individualisation.

Dans la zone PUF, un réseau de vias 30 aléatoirement connectés est ainsi obtenu, avec des vias totalement connectés 30_{OK} et des vias 30_{KO} qui ne sont pas connectés ou qui sont partiellement connectés. La position des différents vias 30_{OK}, 30_{KO} et leur nombre varie d'une zone PUF à une autre zone PUF, d'une puce microélectronique à une autre puce microélectronique.

Comme illustré aux figures 5A, 5B, dans la zone non PUF les zones de contact 20 siliciurées ne sont pas contaminées par du fluor et les ouvertures de vias 320 sont dépourvues de résidus fluorés, après stripping O2. Selon une variante, la siliciuration des zones de contact 20 peut être effectuée après ouverture de la couche 24 d'arrêt de gravure. L'absence de siliciure réactif lors de la gravure des ouvertures de vias permet d'éviter l'apparition de résidus.

Les ouvertures 320 de la zone non PUF sont ensuite remplies par un matériau conducteur, de préférence du cuivre, de façon à former uniquement des vias fonctionnels 30_{OK}.

Au vu de la description qui précède, il apparaît clairement que le procédé proposé offre une solution particulièrement efficace pour réaliser une zone d'individualisation de type PUF présentant une défectivité dans le niveau de contacts, et une zone non PUF sans défectivité et destinée au fonctionnement normal de la puce.

L'invention n'est pas limitée aux modes de réalisations précédemment décrits.

## Revendications

1. Procédé de réalisation d'une zone d'individualisation (PUF) d'une puce microélectronique, ladite puce comprenant au moins :
• un niveau de composants, lesdits composants comprenant chacun au moins une zone de contact (20) métallique,
• un niveau de contact (30A) comportant des vias (30) destinés à connecter électriquement les zones de contact (20) métalliques du niveau de composants,
• la puce présentant au moins une autre zone, distincte de la zone d'individualisation, destinée à former une zone fonctionnelle de la puce,
le procédé comprenant au moins les étapes suivantes effectuées au niveau de la zone d'individualisation (PUF) de la puce :
• fournir au moins le niveau de composants,
• former au moins une couche diélectrique (200) sur le niveau de composants, ladite couche diélectrique (200) étant à base d'un matériau diélectrique,
• former sur l'au moins une couche diélectrique (200) un masque de gravure (300) présentant des ouvertures de masque (301) situées au moins en partie au droit des zones de contact (20) métalliques et rendant accessible l'au moins une couche diélectrique (200),
• graver l'au moins une couche diélectrique (200) au travers des ouvertures de masque (301) par au moins une gravure de façon à former des ouvertures de vias (320) débouchant sur les zones de contact (20) métalliques du niveau de composants,
• former des résidus (R) fluorés aléatoirement répartis au niveau de certaines ouvertures de vias (320_{R}), en apportant des espèces fluorées sur au moins certaines zones de contact (20) métalliques, la formation des résidus (R) fluorés se faisant in situ, les ouvertures de vias (320, 320_{R}) comprenant alors des ouvertures (320_{R}) avec résidus fluorés et des ouvertures (320) sans résidus,
• remplir les ouvertures de vias (320, 320_{R}) avec un matériau électriquement conducteur de sorte à former au moins les vias (30) du niveau (30A) de contact, lesdits vias (30) comprenant des vias fonctionnels (30_{OK}) au niveau des ouvertures sans résidus (320) et des vias altérés (30_{KO}) au niveau des ouvertures avec résidus fluorés (320_{R}),
ledit procédé comprenant en outre, préalablement à la formation des résidus (R) fluorés dans la zone d'individualisation (PUF), une formation d'un masque de protection sur la zone destinée à former la zone fonctionnelle de la puce.

2. Procédé selon la revendication précédente dans lequel la formation des résidus (R) fluorés est effectuée par plasma à base d'espèces fluorées, avec une tension de polarisation nulle.

3. Procédé selon la revendication précédente dans lequel les espèces fluorées sont prises parmi CF4, NF3 ou SF6.

4. Procédé selon l'une quelconque des revendications précédentes comprenant en outre une étape de retrait du masque de gravure (300) avant formation des résidus (R).

5. Procédé selon l'une quelconque des revendications précédentes dans lequel le masque de gravure (300) est à base de carbone (C).

6. Procédé selon les deux revendications précédentes en combinaison dans lequel le retrait du masque de gravure (300) est effectué par plasma à base d'oxygène.

7. Procédé selon l'une quelconque des revendications précédentes dans lequel les zones de contact (20) métalliques sont à base de siliciure métallique, et dans lequel les résidus (R) fluorés présentent une résistivité électrique supérieure à celle des zones de contact (20).

8. Procédé selon l'une quelconque des revendications précédentes dans lequel les zones de contact (20) métalliques sont à base de Ni, par exemple NiPtSi.

9. Procédé selon l'une quelconque des revendications précédentes dans lequel l'au moins une couche diélectrique comprend une première couche (24) à base de SiN formée directement sur les zones de contact (20) et une deuxième couche (200) à base de SiO2 formée sur ladite première couche (24), et dans lequel l'au moins une gravure comprend une gravure de la deuxième couche (200) par plasma à base d'une chimie CF4/C4F8, suivie d'une gravure de la première couche (24) par plasma à base d'une chimie CH3F/Ar/O2.

10. Procédé selon l'une quelconque des revendications précédentes dans lequel les composants sont des transistors et les zones de contact (20) sont prises parmi des sources (22), des drains (23), des grilles (21) desdits transistors.

11. Procédé de réalisation d'un dispositif microélectronique comportant au moins un circuit intégré, le circuit intégré comportant au moins :
• un niveau de composants, comprenant chacun au moins une zone de contact (20),
• un niveau de contact (30A) comportant des vias (30) destinés à connecter électriquement les zones de contact (20) du niveau de composants,
• une zone d'individualisation (PUF),
le procédé de réalisation du dispositif microélectronique comprenant la réalisation de la zone d'individualisation (1) en mettant en oeuvre le procédé selon l'une quelconque des revendications précédentes sur une partie seulement du circuit intégré.
